# EUROPÄISCHE PATENTSCHRIFT

(11) **EP 1 169 370 B1**
(45) Veröffentlichungstag und Bekanntmachung des Hinweises auf die Patenterteilung: **15.03.2006**
(21) Anmeldenummer: 00920526.1
(22) Anmeldetag: 21.03.2000
(51) Int. Cl.: C08G 18/10, C08G 18/12, C08G 18/28, C09D 175/04, C08G 18/44

(54) **POLYURETHANLÖSUNGEN MIT ALKOXYSILANSTRUKTUREINHEITEN**
POLYURETHANE SOLUTIONS CONTAINING ALKOXYSILANE STRUCTURAL UNITS
SOLUTIONS DE POLYURETHANE CONTENANT DES UNITES STRUCTURALES D'ALCOXYSILANE

(30) Priorität: 01.04.1999 DE 19914879
(43) Veröffentlichungstag der Anmeldung: 09.01.2002
(73) Patentinhaber: Bayer MaterialScience AG, 51368 Leverkusen (DE)
(72) Erfinder: BLUM, Harald, D-51375 Leverkusen (DE); SCHÜTZE, Detlef-Ingo, D-51061 Köln (DE)
(86) Internationale Anmeldenummer: PCT/EP2000/002484
(87) Internationale Veröffentlichungsnummer: WO 2000/059974

(56) Entgegenhaltungen:
- EP-A- 0 831 108
- GB-A- 1 474 105
- US-A- 3 886 226
- US-A- 4 582 873

## Beschreibung

Die Erfindung betrifft Polyurethanlösungen mit Alkoxysilanstruktureinheiten, Verfahren zur Herstellung Alkoxysilanstruktureinheiten enthaltender Polyurethanlösungen und die Verwendung Alkoxysilanstruktureinheiten enthaltender Polyurethanlösungen.

Polyurethanlösungen sind seit langem bekannt, z.B. D. Diederich, Methoden der Organischen Chemie (Houben-Weyl), Band E 20, Georg Thieme Verlag, 1997 und dort zitierte Literatur.

Polyurethanlösungen sind in der Regel hochmolekulare Umsetzungsprodukte aus aliphatischen und/oder aromatischen Di- bzw. Polyisocyanaten mit di- bzw. trifunktionellen Polyolen und/oder Diaminen. Die Umsetzung der isocyanatfunktionellen mit den hydroxyl- und/oder aminofunktionellen Verbindungen erfolgt dabei zur Erzielung der gewünschten hohen Molekulargewichte nahe am Äquivalenzpunkt.

Um lösliche und gut verarbeitbare Produkte zu erhalten, muß bei Erreichen der gewünschten Molekulargewichte bzw. Viskositäten der Polyurethanlösungen die Kettenaufbaureaktion abgestoppt werden. Dies geschieht üblicherweise durch Zugabe niedermolekularer, reaktiver Verbindungen wie z.B. Monoamin (DE-A 2 633 293), Monoisocyanat oder Acetanhydrid. (DE-A 2 500 921, EP-A 129 396), durch Zugabe reaktiver monofunktioneller Alkohole wie Methanol oder durch Zugabe anderer kettenabstoppend wirkender Verbindungen wie z.B. Butanonoxim (DE-A 3 142 706).

In der technischen Praxis wird dabei in der Regel ein gewisser Überschuß an Abstoppungsreagenz zugegeben, um eine sichere Abstoppung zu gewährleisten. Dieser Überschuß kann sich jedoch negativ auf Beschichtungseigenschaften auswirken, was sich z.B. durch Geruchsbelästigung, durch Ausschwitzen, durch Haftungsprobleme sowie durch Bildung von Fehlstellen im Film durch Blasen und Kraterbildung bemerkbar machen kann. Auch die Lagerstabilität solcher Lösungen kann dadurch beeinträchtigt werden. Überschüssiges freies Monoamin, Monoisocyanat oder auch überschüssiger reaktiver Monoalkohol kann durch schleichende Reaktion mit Urethan- oder Esterbindungen im Polymer, insbesondere während der in der Praxis unvermeidlichen Lagerzeiten, zu erheblichen Viskositätsänderungen, bis hin zu gravierenden Abbauerscheinungen, verbunden mit einem Verlust der Eigenschaften, führen.

Da Polyurethanlösungen in der Regel keine reaktiven Endgruppen mehr aufweisen, erfolgt nach der Applikation lediglich eine physikalische Trocknung. Eine chemische Vernetzung über reaktive Gruppen am Kettenende zur Ausbildung sehr hochmolekularer Polymerer mit verbessertem Eigenschaftsniveau ist so nicht mehr möglich.

Aus der DE-A 3 401 753 sind Polyurethanlösungen mit endständigen aromatischen Aminogruppen bekannt, die für eine spätere Vernetzungsreaktion zur Verfügung stehen. Dieses erfordert jedoch die nachträgliche Zugabe eines Reaktionspartners.

Die JP 0 8253 545 beschreibt vernetzbare Urethanharzzusammensetzungen, die Verbindungen mit zwei isocyanatreaktiven Gruppen und einer hydrolysierbaren Silylgruppe enthalten. Die Urethanharze enthalten ausschließlich seitenständig gebundene Silylgruppen. Dies führt zu vernetzten Klebstoffen oder Beschichtungen mit hoher Härte, jedoch nur geringer Elastizität bzw. Dehnfähigkeit. Verbindungen mit zwei isocyanatreaktiven Gruppen und einer hydrolysierbaren Gruppe sind zudem als Abstoppungsreagenz ungeeignet.

Aufgabe der Erfindung war es daher, Polyurethanlösungen zur Verfügung zu stellen, die die genannten Nachteile nicht aufweisen. Es sollen insbesondere Polyurethanlösungen zur Verfügung gestellt werden, die Polyurethane mit hohen Molekulargewichten enthalten, sicher herstellbar und abstoppbar sind und die zudem bei der Verwendung in Beschichtungen keine Probleme durch Geruchsbelästigung, Ausschwitzen, unzureichende Haftung oder nicht ausreichende Filmoptik verursachen. Dabei muß sichergestellt sein, daß sich eventuell zugesetzte überschüssige Mengen an Abstopper nicht negativ auf die Lagerstabilität der Lösung und auf die Eigenschaften der Beschichtung auswirken und auch keine gesundheitsschädlichen Auswirkung auf Verarbeiter und Anwender zu erwarten sind.

Überraschender Weise wurde nun gefunden, daß Polyurethanlösungen, die Verbindungen mit einer isocyanatreaktiven Gruppe und mindestens einer Alkoxysilangruppe als Abstopper eingebaut enthalten, die gestellten Anforderungen erfüllen. Überraschenderweise wurde darüber hinaus auch eine verbesserte Hydrolysebeständigkeit, eine sehr gute Haftung und ein besonders angenehmer Griff bei Beschichtungen auf Basis der erfindungsgemäßen Polyurethanlösungen gefunden. Überraschender Weise wurde auch gefunden, daß die erfindungsgemäßen Polyurethanlösungen zur Herstellung hochwertiger Beschichtungen mit hoher Wasserdampfdurchlässigkeit, und einem damit verbundenen, ausgezeichneten Tragekomfort sehr gut geeignet sind. Die erfindungsgemäßen Beschichtungen vereinen dabei eine hohe Wasserdampfdurchlässigkeit mit einer sehr guten Wasserfestigkeit bzw. Naßechtheit und einer relativ niedrigen Wasserquellung.

Polyurethanlösungen, die eine Verbindung mit einer isocyanatreaktiven Gruppe und einer Alkoxysilangruppe als Abstopper und zusätzlich eine Verbindung mit mindestens zwei isocyanatreaktiven Gruppen und mindestens einer Alkoxysilanstruktureinheit in geringen Mengen eingebaut enthalten, führen überraschenderweise ebenfalls zu Beschichtungen, die die oben aufgeführten Anforderungen erfüllen und darüber hinaus sowohl eine ausgezeichnete Filmmechanik, insbesondere eine hoher Dehnfähigkeit und Elastizität, als auch gleichzeitig sehr hohe Schmelz- bzw. Erweichungstemperaturen aufweisen, was für viele Anwendungen, z.B. in der Textilbeschichtung, sehr vorteilhaft ist.

Polyurethanlösungen, die als Abstopper ein Asparaginsäureesterstruktureinheiten enthaltendes Umsetzungsprodukt einer Verbindung mit einer primären Aminogruppe und mindestens einer Alkoxysilangruppe mit einem Maleinsäuredialkylester enthalten, erfüllen überraschenderweise trotz der bekannten verringerten Reaktivität der Asparaginsäureesterstruktureinheiten ebenfalls die oben genannten Anforderungen. Sie weisen darüber hinaus den weiteren Vorteil auf, daß auch größere Mengen Abstopper, auch zu einem sehr frühen Reaktionszeitpunkt und auch ohne Anwesenheit von organischen Lösemitteln ohne die Gefahr der Bildung schwerlöslicher bzw. unlöslicher Harnstoffe oder Gelpartikel eingesetzt werden. Weiterhin können zum anderen überraschenderweise Beschichtungen erhalten werden, die neben einer ausgezeichneten Filmmechanik einen exzellenten, besonders weichen Griff und einen sehr hohen Tragekomfort aufweisen, was für viele Anwendungen sehr wichtig ist.

Gegenstand der Erfindung sind somit Polyurethanlösungen mit Alkoxysilanendruppeneinheiten, dadurch gekennzeichnet, daß sie organisch gelöste Umsetzungsprodukte sind,
a) mindestens eines, mindestens difunktionellen Polyols des Molekulargewichtes 500 bis 16 000,
b) mindestens eines, mindestens difunktionellen Polyisocyanates des Molekulargewichtes 140 bis 1 500,
c) mindestens eines niedermolekularen, mindestens difunktionellen Alkohols und/oder Amins des Molekulargewichtes 32 bis 500,
d) mindestens einer, mindestens eine Alkoxysilangruppe und eine isocyanatreaktive Gruppe enthaltenden Verbindung und
e) gegebenfalls einer monofunktionellen Substanz mit einer Amino-, Alkohol- oder Oximgruppe,

wobei die Menge an Abstopperäquivalenten aus Komponente d) mindestens 50 % der gesamten Abstoppermenge aus d) und e) beträgt. Die Polyurethane enthalten keine freien isocyanatgruppen.

Ein bevorzugter Gegenstand der Erfindung sind Polyurethanlösungen mit Alkoxysilanendgruppeneinheiten, dadurch gekennzeichnet, daß sie organisch gelöste Umsetzungsprodukte sind
a) 40 bis 92 Gew.-% mindestens eines, mindestens difunktionellen Polyols des Molekulargewichtes 500 bis 16000,
b) 7 bis 50 Gew.-% mindestens eines, mindestens difunktionellen Polyisocyanates des Molekulargewichtes 140 bis 1 500,
c) 0,5 bis 20 Gew.-% mindestens eines niedermolekularen, mindestens difunktionellen Alkohols und/oder Amins des Molekulargewichtes 32 bis 500,
d) 0,1 bis 5 Gew.-% mindestens einer, mindestens eine Alkoxysilangruppe und eine isocyanatreaktive Gruppe enthaltenden Verbindung und
e) gegebenfalls einer monofunktionellen Substanz mit einer Amino-, Alkohol- oder Oximgruppe,

wobei die Menge am Abstopperäquivalenten aus Komponente d) mindestens 75 % der gesamten Abstoppermenge aus d) und e) beträgt.

Ein besonders bevorzugter Gegenstand der Erfindung sind Polyurethanlösungen, dadurch gekennzeichnet, daß sie organisch gelöste Umsetzungsprodukte sind
a) 47 bis 88 Gew.-% mindestens eines, mindestens difunktionellen Polyols des Molekularge-wichtes 500 bis 16 000,
b) 10 bis 40 Gew.-% mindestens eines, mindestens difunktionellen Polyisocyanates des Molekulargewichtes 140 bis 1 500,
c) 0,8 bis 17 Gew.-% mindestens eines niedermolekularen, mindestens difunktionellen Alkohols und/oder Amins des Molekulargewichtes 32 bis 500,
d) 0,2 bis 3,0 Gew.-% einer eine Alkoxysilangruppe und eine isocyanatreaktive Gruppe enthaltenden Verbindung und
e) 0-0,5 Gew.-% einer monofunktionellen Substanz mit einer Amino-, Alkohol- oder Oximgruppe,

wobei die Menge am Abstopperäquivalenten aus Komponente d) mindestens 95 % der gesamten Abstoppermenge aus d) und e) beträgt.

Gegenstand der Erfindung ist auch ein Verfahren zur Herstellung von Polyurethanlösungen mit Alkoxysilanendgruppeneinheiten, dadurch gekennzeichnet, daß zunächst aus mindestens einem Polyol a), mindestens einem difunktionellen Polyisocyanates b) gegebenenfalls unter Mitverwendung einer niedermolekularen Komponente c) in einer ein- oder zweistufigen Reaktion ein isocyanatfunktionelles Polyurethan hergestellt wird, welches dann gegebenenfalls in einem weiteren Reaktionsschritt durch Umsetzung mit einer mindestens difunktionellen Komponente c) einen weiteren Molekulargewichtsaufbau erfährt und in einem abschließenden Reaktionsschritt mit mindestens einer eine Alkoxysilangruppe und eine isocyanatreaktive Gruppe enthaltenden Verbindung d), gegebenfalls unter Mitverwendung einer monofunktionellen Komponente e) zu einem keine freien Isocyanatgruppen mehr aufweisenden hochmolekularen Polyurethan mit Alkoxysilanstruktureinheiten umgesetzt wird, wobei entweder vor, während oder nach dem ersten Reaktionsschritt soviel organisches Lösemittel zugesetzt wird, das die resultierende Polyurethanlösung mit Alkoxysilanendgruppen einen Festkörpergehalt von 9 bis 65 Gew.-% aufweist.

Gegenstand der Erfindung ist auch die Verwendung von Alkoxysilanstruktureinheiten aufweisenden Polyurethanlösungen in Lacken, Beschichtungen, Dichtstoffen und/oder Klebstoffen.

Die Bezeichnung Polyurethanlösung schließt auch Polyurethan-Polyharnstoff Lösungen und auch Lösungen ein, die z.B. Trimerisat-, Uretdion-, Allophanat-, und/oder Biuretstruktureinheiten in untergeordneten Mengen neben Urethan- und/oder Harnstoffstruktureinheiten enthalten. Die Lösungen sind in der Regel klar, es sind jedoch auch Lösungen eingeschlossen, die ein trübes bzw. opakes Aussehen aufweisen, dies ist jedoch weniger bevorzugt.

Zur Herstellung der erfindungsgemäßen Polyurethanlösungen geeignete Polyolkomponenten a) sind z.B. Polyesterpolyole (z.B. Ullmanns Enzyklopädie der technischen Chemie, 4. Auflage, Band 19, S. 62-65). Geeignete Rohstoffe zur Herstellung dieser Polyesterpolyole sind difunktionelle Alkohole wie Ethylenglykol, 1,2-und 1,3-Propylenglykol, 1,3-, 1,4-, 2,3-Butandiol, 1,6-Hexandiol, Neopentylglykol, Trimethylhexandiol, Triethylenglykol, Tetraethylenglykol, hydrierte Bisphenole, Trimethylpentandiol, Diethylendiglykol, Dipropylendiglykol, 1,4-Cyclohexan-diol, 1,4-Cyclohexandimethanol und difunktionelle Carbonsäuren bzw. deren Anhydride wie Adipinsäure, Phthalsäure(anhydrid), Isophthalsäure, Maleinsäure(an-hydrid), Terephthalsäure, Tetrahydrophthalsäure(anhydrid), Hexahydrophthalsäure(anhydrid), Bernsteinsäure(anhydrid), Fumarsäure, Azelainsäure, Dimerfettsäuren. Ebenfalls zur Mitvervendung in untergeordneten Mengen geeignete Polyesterrohstoffe sind Monocarbonsäuren wie Benzoesäure, 2-Ethylhexansäure, Ölsäure, Sojaölfettsäure, Stearinfettsäure, Erdnußölfettsäure, Leinölfettsäure, Nonansäure, Cyclohexanmonocarbonsäure, Isononansäure, Sorbinsäure, Konjuenfettsäure, höherfunktionelle Carbonsäuren oder Alkohole wie Trimellithsäure(an-hydrid), Butantetracarbonsäure, Trimerfettsäuren, Trimethylolpropan, Glycerin, Pentaerythrit, Rizinusöl, Dipentaerythrit und andere nicht namentlich genannte Polyesterrohstoffe.

Ebenfalls geeignete Polyolkomponenten a) sind Polycarbonatdiole die z.B durch Umsetzung von Diphenyl- oder Dimethylcarbonat mit niedermolekularen Di- oder Triolen bzw. epsilon-Caprolacton-modifizierten Di- oder Triolen erhalten werden können.

Ebenfalls geeignete Polyolkomponenten a) sind hydroxyfunktionelle Silicone bzw. Polysiloxane wie z.B. Baysilon® OF (Bayer AG).

Ebenfalls geeignet sind Polyesterdiole auf Lactonbasis, wobei es sich um Homo- oder Mischpolymerisate von Lactonen, bevorzugt um endständige Hydroxylgruppen aufweisende Anlagerungsprodukte von Lactonen wie z.B. epsilon-Caprolacton oder gamma-Butyrolacton an difunktionelle Startermoleküle handelt. Geeignete Startermoleküle können die oben genannten Diole, aber auch niedermolekulare Polyester- oder Polyetherdiole sein. Anstelle der Polymerisate von Lactonen können auch die entsprechenden Hydroxycarbonsäuren eingesetzt werden.

Ebenfalls geeignete Polyolkomponenten a) sind Polyetherpolyole. Sie sind z.B. durch Polymerisation von Ethylenoxid, Propylenoxid und/oder Tetrahydrofuran mit sich selbst, z.B. in Gegenwart von BF₃ oder basischen Katalysatoren oder aber durch Anlagerung dieser Verbindungen gegebenenfalls auch im Gemisch oder nacheinander, an Starterkomponenten mit reaktionsfähigen Wasserstoffatomen, wie Alkohole, Amine, Aminoalkohole oder Wasser erhältlich.

Die genannten Polyolkomponenten a) können auch als Mischungen, gegebenfalls auch zusammen mit anderen Polyolen a) wie z.B. Polyesteramiden, Polyetherestem, Polyacrylaten, Polyolen auf Epoxidharzbasis, eingesetzt werden.

Die Hydroxylzahl der Polyole a) liegt bei 5 bis 350, vorzugsweise bei 8 bis 200 mg KOH/g Substanz. Die Molekulargewichte der Polyole a) liegen zwischen 500 und 25 000, vorzugsweise zwischen 500 und 15 000, wobei in einer bevorzugten Ausfiihrungsform zumindest teilweise Polyole a) mit einem Molekulargewicht von >9 000 g/Mol eingesetzt werden.

Bevorzugt werden als Komponente a) hydrolysestabile Polyole des Molekulargewichtes 300 bis 3 500, insbesondere 900 bis 2 500, bestehend insbesondere zu mindestens 50 % aus Polycarbonatdiolen, welche zusammen mit Tetrahydrofurandiolen und/oder di- bzw. trifunktionellen Polyethern auf Propylenoxid- bzw. Propylenoxid-/Ethylenoxidbasis bzw. Mischungen der genannten hydrolysestabilen Polyole eingesetzt werden können, wobei bei Verwendung trifunktioneller Polyetherpolyole diese höchstens in Mengen bis zu 4 Gew.-% bezogen auf den Gesamtfeststoffgehalt des Polymers eingesetzt werden. Diese hydrolysestabilen Polyole können auch zusammen mit Polyesterpolyolen, vorzugsweise Polyesterpolyolen mit vergleichsweiser guter Hydrolysestabilität, wie z.B. Polyester auf Basis Phthalsäureanhydrid, Isophthalsäure, Dimerfettsäure, Hexandiol und/oder Neopentylglykol eingesetzt werden.

In einer weiteren bevorzugten Ausführungsform werden als Komponente a) hydrophile Polyole, wie z.B. Ethylenoxidpolyether, Ethylenoxid-/Propylenoxidpolyether oder Polyester auf Basis von Triethylenglykol oder Tetraethylenglykol und Dicarbonsäuren in solchen Mengen eingesetzt, daß damit hergestellte Beschichtung wasserdampfdurchlässig sind. Als Komponente a) sind dann vorzugsweise 10 bis 60 Gew.-% hydrophile Polyole neben 23 bis 50 Gew.-% nichthydrophilen Polyolen, jeweils bezogen auf Gesamtfeststoffgehalt des Polyurethans, enthalten, wobei die Gesamtmenge Komponente a) maximal 92 Gew.-% des Gesamtfeststoffgehaltes des Polyurethans beträgt.

Entsprechende Polyurethanlösungen sind zur Herstellung hochwertiger Beschichtungen mit hoher Wasserdampfdurchlässigkeit und dem damit verbundenen, ausgezeichneten Tragekomfort sehr gut geeignet. Die erfindungsgemäßen Beschichtungen vereinen dabei eine hohe Wasserdampfdurchlässigkeit mit einer sehr guten Wasserfestigkeit bzw. Naßechtheit und einer relativ niedrigen Wasserquellung.

Der Gesamtanteil an hydrophilen Bestandteilen - Polyole a) und gegebenenfalls hydrophile Diole bzw. Diamine c)- beträgt dabei bezogen auf den Gesamtfeststoffgehalt der Polyurethanlösung 10 bis 60, vorzugsweise 20 bis 45 Gew.-%.

Die Komponente b) besteht aus mindestens einem organischen, mindestens difunktionellen Polyisocyanat des Molekulargewichtes 140 bis 1500, vorzugsweise 168 bis500. Geeignet sind z.B. Hexamethylendiisocyanat (HDI), Isophorondiisocyanat (IPDI), 4,4'-Diisocyanato-dicyclohexylmethan (H12MDI), 1,4-Butandiisocyanat, H₆-2,4- und/oder 2,6-Diisocyanato-toluol, Hexahydrodiisocyanatoxylol, 2,4-oder 2,6- Diisocyanatotoluol (TDI), Xylylendiisocyanat und 4,4'-Diisocyanatodiphenylmethan (MDI). Ebenfalls mit verwendet werden können an sich bekannte Polyisocyanate auf Basis der genannten und auch anderer Isocyanate mit Uretdion-, Biuret-, Isocyanurat-, Iminoxadiazindion- oder Urethanstruktureinheiten, dies ist jedoch nicht bevorzugt.

Bevorzugt ist die ausschließliche Verwendung von aliphatischen und/oder cycloaliphatischen difunktionellen Isocyanaten des Molekulargewichtes 168 bis 262 wie Isophorondiisocyanat und/oder Hexamethylendiisocyanat und/oder Diisocyanatodicyclohexylmethan (Desmodur® W, Bayer AG) und/oder H₆-2,4- und/oder 2,6-Diisocyanatotoluol, wobei besonders bevorzugt die Komponente b) zu mindestens 75 Gew.-% aus Isophorondiisocyanat oder H₆-2,4- und/oder 2,6-Diisocyanatotoluol besteht.

Bevorzugt ist ebenfalls die ausschließliche Verwendung von aromatischen Diisocyanaten des Molekulargewichtes 174 bis 280, insbesondere 2,4- und/oder 2,6-Diisocyanatotoluol und/oder 4,4'-Diisocyanatodiphenylmethan.

In einer bevorzugten Ausführungsform werden allophanatgruppenhaltige, difunktionelle Isocyanate als Komponente b) eingesetzt. Solche Komponenten werden erhalten, indem ein Diisocyanat, vorzugsweise aromatische Diisocyanate wie z.B.

MDI oder TDI mit aliphatischen, linearen Monoalkoholen mit 4 bis 18 Kohlenstoffatomen wie z.B. n-Butanol, Hexanol, 2-Ethylhexanol oder Stearylalkohol gegebenenfalls unter Verwendung geeigneter Katalysatoren wie z.B. Zinkacetylacetonat bei Temperaturen von z.B. 40 bis 110°C unter Allophanatbildung umgesetzt werden. Dabei führt die Umsetzung von 2 Molekülen Diisocyanat mit einem Molekül Monoalkohol zur Bildung eines Diisocyanates mit einer Allophanatstruktureinheit, wobei auch höhere Homologe gebildet werden können. Es ist auch möglich die Allophanatbildung in situ bei dem Aufbau des erfindungsgemäßen Polyurethans durchzuführen. Die Mitverwendung altophanatgruppenhaltiger Diisocyanate führt überraschenderweise zu Polyurethanen, die die Herstellung von Beschichtungen mit besonders guten Beständigkeitseigenschaften z.B. gegen Lösemitteleinwirkung oder Wasser und einem angenehmen Griff ermöglichen.

Bei der Komponente c) handelt es sich um mindestens eine niedermolekulare Verbindungen des Molekulargewichtsbereiches 32 bis 500 mit mindestens zwei gegenüber Isocyanatgruppen reaktiven Gruppen. Diese reaktiven Gruppen sind Hydroxyl- und/oder primäre bzw. sekundäre Aminogruppen.

Geeignete Komponenten c) sind z.B. Ethylenglykol, 1,2- bzw. 1,3-Propylenglykol, 1,4-Butan-diol, Neopentylglykol, 1,6-Hexandiol, Trimethylpentandiol, Trimethylolpropan, Glycerin, das Umsetzungsprodukt aus 2 Mol Propylencarbonat und 1 Mol Hydrazin, Ethylendiamin, Diethylentriamin, Isophorondiamin, Hexamethylendiamin, Acetonazin, 4,4-Diaminodicyclo-hexylmethan, Hydroxyethylethylendiamin, Ethanolamin, Diethanolamin, Isopropanolamin, Diisopropanolamin, N-Methylethanolamin, Aminomethylpropanol, Hydrazin(hydrat), Propylendiamin, Dimethylethylendiamin, Adipinsäuredihydrazid, 2-Aminoethylaminoethan-sulphonat, das 1:1-Umsetzungsprodukt aus Acrylsäure und Isophorondiamin oder Ethylendiamin, Dimethylolessigsäure, 2,2'-Dimethylolpropionsäure, 2,2'-Dimethylolbuttersäure, 2,2'-Dimethylolpentansäure, gegebenenfalls Ethergruppen aufweisenden Sulfonatdiolen der in der US-A 4 108 814 beschrieben Art, aminofunktionelle Sulphonate mit ein oder zwei Aminogruppen, N-2-(aminoethyl)-3-aminopropyltrimethoxysilan.

Wird eine Komponente c) im ersten, einstufig oder zweistufig durchgeführten Reaktionsschritt mitverwendet, so werden vorzugsweise dihydroxyfunktionelle Verbindungen, insbesondere Ethylenglykol, 1,4-Butandiol, 1,6-Hexandiol oder Ethergruppen aufweisende Sulphonatdiole eingesetzt.

Wird eine Komponente c), vorzugsweise nach Zugabe von Lösemittel im zweiten Reaktionsschritt eingesetzt, so werden vorzugsweise diaminafunktionelle Verbindungen, insbesondere Ethylendiamin, Isophorondiamin, 4,4-Diaminodicyclohexymethan, Hydrazin(hydrat), Adipinsäuredihydrazid, 2-Aminoethylaminoethansulphonat eingesetzt.

In einer bevorzugten Ausführungsform werden Alkoxysilangruppen enthaltende, diaminofunktionelle Komponenten c) als Kettenverlängerer, vorzugsweise in Mengen bis 2 Gew.-%, mit verwendet. Die Verwendung größerer Mengen solcher Komponenten c) führt überraschenderweise zu Polyurethanlösungen, die bei Verwendung als Beschichtungen eine zu hohe Härte, eine zu geringe Dehnfähigkeit bzw. Elastizität, vor allem bei niedrigen Temperaturen, und einen relativ harten, kalten und eher unangenehmen Griff ergeben.

In einer bevorzugten Ausführungsform werden als Komponente c) hydrophile, Salzgruppen aufweisende difunktionelle Verbindungen der oben genannten Art in Mengen von 2 bis 16 Gew.-%, besonders bevorzugt von 2,5 bis 13 Gew.-% gegebenenfalls in Kombination mit hydrophilen Polyolen a) eingesetzt, um entsprechenden Beschichtungen wasserdampfdurchlässigen Charakter zu verleihen.

Besonders bevorzugt werden dabei hydrophile Komponenten c) zusammen mit den oben genannten hydrophilen Polyolen a) eingesetzt. Dadurch können Beschchichtungen mit besonders hoher Wasserdampfdurchlässigkeit hergestellt werden.

In einer bevorzugten Ausführungsform werden als Komponente c) Hydrazin(hydrat), Adipinsäuredihydrazid und/oder das Umsetzungsprodukt aus 2 Mol Propylencarbonat und 1 Mol Hydrazin in Mengen von 0,1 bis 4,5 Gew.-% mitverwendet. Damit können Polyurethanlösungen mit besonders hoher Thermo- und Verfärbungsstabilität erhalten werden.

Als Komponente d) geeignete Alkoxysilane sind Aminoalkylsiloxane wie z.B. 3-Aminopropyltriethoxysilan, 3-Amino-propyltrimethoxysilan, 3-Aminopropyltributoxysilan, 2-Aminoethyltriethoxysilan, 2-Amino-ethyltrimethoxysilan, 2-Aminoethyltributoxysilan, 4-Aminobutyltriethoxysilan, 4-Amino-butyltrimethoxysilan, Umsetzungsprodukte der genannten Alkoxysilane mit Maleinsäuredialkylestem wie z.B Maleinsäurediethylester, Maleinsäuredimethylester oder Maleinsäuredibutylester, N-Phenylaminopropyltrimethoxysilan, Bis-(3-trimethoxysilylpropyl)amin, Verbindungen der genannten Art, bei der eine oder zwei der Alkoxygruppen durch Alkylgruppen ersetzt sind und Mischungen der genannten und auch anderen Alkoxysilane.

Komponenten d) werden in Mengen von 0,1 bis 5, vorzugsweise von 0,2 bis 3,0, besonders bevorzugt von 0,3 bis 1,3 Gew.-% eingesetzt.

In einer bevorzugten Ausführungsform beträgt der rechnerisch ermittelte Gehalt des Feststoffes der Polyurethanlösungen an -Si-(O-)₃ Struktureinheiten weniger als 1,2 Gew.-%. Damit können z.B. Beschichtungen für Textilien und Leder mit hohem mechanischem Eigenschaftsniveau, insbesondere betreffend Dehnfähigkeit und Elastizität, und angenehm weichen Griff erhalten werden. Höhere Anteile an diesen Struktureinheiten führen zu Beschichtungen, die diese gewünschten Eigenschaften nur noch im reduzierten Maß zeigen.

In einer bevorzugten Ausführungsform wird als Komponente d) ein monofunktionelles Alkoxysilan in Mengen von 0,3 bis 1,3 Gew.-% zusammen mit 0,1 bis 2,0 Gew.-% eines diaminofunktionellen Alkoxysilans Komponente c) eingesetzt, wobei die Anzahl der endständigen Alkoxysilangruppen mindestens 50 Gew.-% aller eingebauten Alkoxysilangruppen betragen muß. Entsprechende Polyurethanlösungen, führen überraschenderweise ebenfalls zu Beschichtungen, die die gestellten Anforderungen erfüllen und darüber hinaus sowohl eine ausgezeichnete Filmmechanik, insbesondere eine hoher Dehnfähigkeit und Elastizität, als auch gleichzeitig sehr hohe Schmelz- bzw. Erweichungstemperaturen aufweisen, was für viele Anwendungen, z.B. in der Textilbeschichtung, sehr vorteilhaft ist.

Bei höheren Anteilen an seitenständigen Alkoxysilanstruktureinheiten resultieren dagegen Beschichtungen, die überraschenderweise deutlich weniger elastisch und dehnfähig sind, sowie einen eher unangenehmen, kalten Griff aufweisen. In den Haftungseigenschaften müssen dann ebenfalls häufig Abstriche gemacht werden.

In einer weiteren bevorzugten Ausführungsform wird als Komponente d) ein monoaminofunktionelles Umsetzungsprodukte eines monoaminofunktionellen Alkoxysilans mit 0,5 bis 1,1, vorzugsweise 0,9 bis 1,05 Äquivalenten Maleinsäurealkylestern, gegebenfalls zusammen mit einem diaminofunktionellen Alkoxysilan, eingesetzt.

Polyurethanlösungen, die als Abstopper ein Asparaginsäureesterstruktureinheiten enthaltendes Umsetzungsprodukt einer Verbindung mit einer primären Aminogruppe und mindestens einer Alkoxysilangruppe mit einem Maleinsäuredialkylester und zusätzlich eine diaminofunktionelle, Alkoxysilanstrukturen aufweisende Verbindung in untergeordneter Menge aufweisen, sind ebenfalls sehr gut z.B. zur Herstellung von hochwertigen Beschichtungen geeignet.

Geeignete gegebenenfalls bei der Herstellung der erfindungsgemäßen Polyurethanlösungen mitzuverwendete monofunktionelle Blockierungsmittel e) können z.B. sein: Butanonoxim, Cyclohexanonoxim, Acetonoxim, Malonester, Triazol, Dimethylpyrazol, monofunktionelle Amine wie z.B.Dibutylamin, Diisopropylamin, monofunktionelle Alkohole wie z.B Ethanol. Falls Komponenten e) eingesetzt werden, geschieht dies vorzugsweise derart, daß zunächst Komponente e) und im Anschluß daran Komponente d) zugegeben wird. Dadurch wird sichergestellt, daß keine nichtumgesetzte Komponenten e) in den erfindungsgemäßen Polyurethanlösungen mehr enthalten sind.

Die Menge an Alkoxysilangruppen enthaltenden Abstopperreagenzien d) bezogen auf die gesamte Abstoppermenge d) und e) beträgt mindestens 50, vorzugsweise 75, ganz besonders bevorzugt mindestens 95 Gew.-%.

Die erfindungsgemäßen Polyurethanlösungen mit Alkoxysilangruppen zeigen bei Raumtemperatur bis zu 75°C eine praxisgerechte Lagerstabilität. Nach der Applikation erfolgt die Trocknung bei Raumtemperatur bis 200°C, vorzugsweise bei 60 bis 160°C.

Die Herstellung der erfindungsgemäßen Polyurethanlösungen mit Alkoxysilanendgruppen erfolgt derart, daß zunächst aus mindestens einem Polyol a), mindestens einem difunktionellen Polyisocyanat b) gegebenenfalls unter Mitverwendung einer niedermolekularen hydroxyfunktionellen Komponente c) in einer ein- oder zweistufigen Reaktion ein isocyanatfunktionelles Polyurethan hergestellt wird, welches dann gegebenenfalls in einem weiteren Reaktionsschritt durch Umsetzung mit einer mindestens difunktionellen Komponente c) gegebenfalls unter Mitverwendung einer mindestens diaminofunktionellen Alkoxysilangruppen enthaltenden Komponente d) einen weiteren Molekulargewichtsaufbau erfährt und in einem abschließenden Reaktionsschritt mit einer monoaminofunktionellen Alkoxysilangruppen enthaltenden Komponente d), gegebenfalls unter Mitverwendung einer monofunktionellen Komponente e) zu einem keine freien Isocyanatgruppen mehr aufweisenden hochmolekularen Polyurethan mit Alkoxysilanendgruppen umgesetzt wird, wobei entweder vor, während oder nach dem ersten Reaktionsschritt soviel organisches Lösemittel zugesetzt wird, das die resultierende Polyure-thanlösung mit Alkoxysilanendgruppen einen Festkörpergehalt von 9 bis 65 Gew.-% aufweist.

In einer Verfahrensvariante kann auch eine einstufige Umsetzung aller Komponenten a), b) und gegebenenfalls c) zu einem isocyanatfunktionellen hochmolekularen Polyurethan, üblicherweise in Anwesenheit geeigneter Lösemittel durchgeführt werden, wobei gegebenfalls durch geringes Nachsetzen von Polyisocyanat b) und/oder niedermolekulare difunktionelle Komponente c) die gewünschte Viskosität und damit das zur Erzielung der erforderlichen Eigenschaften nötige Molekulargewicht erreicht wird und wobei anschließend die Kettenabbruchreaktion durch Zugabe eines monoaminofunktionellen Alkoxysilans erfolgt. Bei dieser Verfahrensvariante werden vorzugsweise monoaminofunktionelle Alkoxysilane in Mengen von 0,3 bis 1,3 Gew.-% eingesetzt.

Die Umsetzung der Komponenten erfolgt in der Regel bei Raumtemperatur bis 120°C, wobei üblicherweise zu Beginn der Herstellung die Umsetzung bei höherer Temperatur, z.B. bei 60 bis 120° C und am Ende bei der Kettenverlängerung bis Kettenabbruchreaktion die Umsetzung bei niedrigeren Temperaturen, z.B. bei Raumtemperatur bis 60° C vorgenommen wird.

Die Umsetzung der Komponenten kann unter Zusatz von üblichen Katalysatoren wie z.B. Dibutylzinndilaurat, Zinn-2-octoat, Dibutylzinnoxid oder Diazabicyclononan durchgeführt werden.

Geeignete Lösemittel zur Herstellung der erfindungsgemäßen Polyurethanlösungen sind z.B. Dimethylformamid, Dimethylacetamid, N-Methylpyrrolidon, Methylethylketon, Methylisobutylketon, Cyclohexanon, Toluol, Xylol, tert. Butanol, Isopropanol, Ethylacetat, Butylacetat, Methoxypropanol, Butylglykol, Methoxypropylacetat, Isobutanol. Die Auswahl von Art, Menge und Zeitpunkt der Zugabe des Lösemittels bzw. der Lösemittelgemische muß derart gewählt werden, daß die Löslichkeit des Endproduktes bzw. der Zwischenstufen gegeben ist, die Viskositäten in einem technisch beherrschbaren Rahmen, d.h. üblicherweise < 200 000 mPas (23°C), liegen und eine Reaktion der Lösemittel mit den Rohstoffen des Polyurethans weitestgehend ausgeschlossen ist. Das heißt z.B., daß alkoholische Lösemittel erst dann verwendet werden sollten, wenn bei der Herstellung des Polyurethans nur noch Isocyanat-Amin-Reaktionen bzw. vergleichbar schnell ablaufende Reaktionen stattfinden.

Die Festkörpergehalt der erfindungsgemäßen Polyurethanlösungen liegen bei 9 bis 65, vorzugsweise bei 20 bis 50 Gew.-%.

Die Viskositäten der erfindungsgemäßen Polyurethanlösungen liegen bei 1 000 bis 200 000 mPas (23°C), vorzugsweise bei 3 000 bis 80 000 mPas (23 °C).

Die Molekulargewichte der erfindungsgemäßen Polyurethanlösungen können z.B. durch Gelpermeationschromatographie bestimmt werden. Sie liegen zwischen 4 000 und 500 000, vorzugsweise zwischen 25 000 und 250 000 g/Mol.

Vor, während oder nach der Herstellung bzw. vor oder während der Anwendung der erfindungsgemäßen Polyurethanlösungen können übliche Hilfs- und Zusatzmittel zugegeben werden wie z.B. Stabilisatoren, Lichtschutzmittel, Verlaufshilfsmittel, Mattierungsmittel, Thermostabilisatoren, Trennmittel, Antioxidantien, UV-Absorber, HALS-Wirkstoffe, Entschäumer, Haftvermittler, Antistatika, Konservierungsmittel, Katalysatoren.

Die erfindungsgemäßen Polyurethanlösungen mit Alkoxysilanstruktureinheiten eignen sich für die Verwendung in Lacken, Beschichtungen, Dichtmassen, Druckfarben und Klebstoffen. Sie können dabei alleine und/oder nach Zusatz der üblichen Hilfsmittel, Zusatzmittel, Pigmente, Füllstoffe, Weichmacher, Löse- und Verdünnungsmittel und/oder in Kombination mit anderen Polymeren bzw. Polymerlösungen oder Oligomeren wie z.B. Polyurethanlösungen, Polyhamstofflösungen, Polyurethan-Polyharn-stofflösungen, Co- und Homopolymerisatlösungen, Chlorkautschuklösungen, Nitrocelluloselösungen, Celluloseacetatlbutyratlösungen, Polyacrylatlösungen, Polyether(lösungen), Polyamidlösungen, Polyepoxid(lösungen), Polyester(lösungen), Polyisocyanat(lösungen), Melamin-Aldehyd-Harz(lösungen), Harnstoffharz(lösungen), Polybutadienlösungen oder Polyolefinlösungen verwendet werden.

Geeignete Anwendungsbereiche sind z.B. die Textilbeschichtung, die Lederbeschichtung, die Kunstlederbeschichtung, Kunststoffbeschichtung und -lackierung, Metallackierung, Lackieren und Beschichten von Holz, Holzwerkstoffen und Möbeln, Beschichtung und Lackierung mineralischer Untergründe aller Art, Straßenmarkierungsfarben. Die erfindungsgemäßen Poly-urethanlösungen können dabei z.B. als Grundierung, Zwischenschicht, Füller, Basislack, Decklack, Klarlack, Einschichtlack, mikroporöse Beschichtung, Haftgrund, Deckstrich, Finish, Direktstrich, Zwischenstrich, Schaumstrich eingesetzt werden.

Die Applikation kann nach allen technisch angewandten Verfahren erfolgen, wie z.B. Gießen, Tauchen, Walzen, Rollen, Streichen, Spritzen, Rakeln oder Koagulation.

### Beispiele

### Beispiel 1

In einem 3-1-Reaktionsgefäß mit Rühr-, Kühl- und Heizvorrichtung werden 520 g eines difunktionellen Propylenoxidpolyethers mit dem Molekulargewicht 2 000 g/Mol eingewogen und auf 60°C erwärmt. Dann werden 205 g 4,4'-MDI (Desmodur 44M, Bayer AG) zugegeben und bei 70°C solange umgesetzt, bis der theoretische Isocyanatwert erreicht bzw. leicht unterschritten worden ist. Dann werden 182 g Dimethylformamid zugegeben und das Polymer gelöst. Dann werden bei 50° C 39,8 g Butandiol-1,4 in 30 Minuten und anschließend weitere 271 g Dimethylformamid zugegeben. Nachdem der theoretische Isocyanatwert erreicht ist, werden 403 g Methylethylketon und 400 g Toluol zugegeben und auf 30°C abgekühlt. In einem separaten Gefäß wird eine Kettenverlängerungslösung aus 15,6 g Isophorondiamin und 104 g Toluol hergestellt. 60 % dieser Lösung wird auf einmal zur isocyanatfunktionellen Polyurethanlösung gegeben. Über IR-Spektroskopie wird dabei der Abfall des Isocyanatgehaltes verfolgt. Durch Zugabe kleiner Mengen der Kettenverlängerungslösung in mehreren Schritten (insgesamt werden weitere 15 % der Kettenverlängerungslösung zugegeben) wird das Molekulargewicht, indirekt über die Viskositätsmessungen bestimmt, aufgebaut. Nachdem eine Viskosität von ca. 16 000 mPas erreicht ist, wird zum Abbruch der Reaktion 18,6 g eines 1:1 Umsetzungsproduktes aus 3-Aminopropyltriethoxysilan und Maleinsäurediethylester zugegeben und solange gerührt, bis keine Isocyanatgruppen mehr nachweisbar sind. Man erhält ein 35 %ige Polyurethanlösung mit endständigen Alkoxysilanstruktureinheiten, die Viskosität beträgt 15 000 mPas.

Während einer Raumtemperaturlagerung im geschlossenen Gefäß über 3 Monate blieb die Viskosität konstant, nach einer Lagerung im geschlossenen Gefäß bei 60°C über 4 Wochen wurde eine Viskosität von 16 000 mPas festgestellt. Damit ist eine praxisgerechte Viskositätsstabilität gegeben.

Die anwendungstechnische Prüfung als Beschichtungsfilm (Filmstärke 45 g/m²) ergab folgende Werte:
Modul 100%: 2,1 MPa
Zugfestigkeit/Bruchdehnung (trocken): 14,3 MPa/790 %
Zugfestigkeit/Bruchdehnung (naß): 14,0 MPa 730 %
Volumenquellung mit Ethylacetat: 350 %
Schmelzpunkt: 155 °C

Dies sind typische Filmwerte, wie sie z.B. bei der Verwendung des Produktes als hochwertiger weicher Direktstrich in der Textilbeschichtung gefordert werden.

### Vergleichsbeispiel 2a)

Zu Vergleichszwecken wurde der Versuch 1) wiederholt, allerdings ohne Zugabe eines Abstoppreagenzes. Die 35 %ige Polyurethanlösung hatte eine Viskosität von 13 000 mPas.

Bei 60°C Lagerung im geschlossenen Gefäß stieg die Viskosität nach wenigen Tagen soweit an, daß keine Viskositätsmessung mehr möglich war. Die Lösung zeigte keine praxisgerechte Stabilität.

Dies bestätigt die Wirksamkeit des monoamonofunktionellen Alkoxysilans als Abstoppreagenz.

### Beispiel 2b

Zu Vergleichszwecken wurde der Versuch 1) wiederholt, allerdings wurde die Abstoppermenge um 30 % erhöht, um den Einfluß von überschüssigem Abstoppungsreagenz auf die Lagerstabilität zu bestimmen. Die 35 %ige Polyurethanlösung hatte eine Viskosität von 13 000 mPas. Nach 4 Wochen Lagerung bei 60°C im geschlossenen Gefäß wurde eine Viskosität von 14 500 mPas bestimmt. Damit hat diese Lösung eine praxisgerechte Lagerstabilität.

### Beispiel 3

In einem 3-1-Reaktionsgefäß mit Rühr-, Kühl- und Heizvorrichtung werden 450,5 g eines difunktionellen Adipinsäure-Hexandiol-Neopentylglykol-Polyesters mit dem Molekulargewicht 1 700 g/Mol eingewogen und auf 70°C erwärmt. Dann werden 122,1 g Isophorondiisocyanat (Desmodur I, Bayer AG) zugegeben und bei 100°C solange umgesetzt, bis der theoretische Isocyanatwert erreicht worden ist. Dann werden 604 g Toluol zugegeben, das Polymer gelöst und auf 30°C abgekühlt. Direkt nach Zugabe von 302 g Isopropanol wird eine in einem separaten Gefäß hergestellte Kettenverlängerungslösung aus 46,8 g Isophorondiamin, 302 g Isopropanol und 250 g Methoxypropanol in 30 Minuten zudosiert. Nach Ende der Zugabe ist ein starker Viskositätsanstieg zu beobachten. 15 Minuten nach der Zugabe ist eine Viskosität von 20 000 mPas (23°C) erreicht, dann werden 6,2 g Aminopropyltriethoxysilan zugegeben und solange gerührt bis keine Isocyanatgruppen mehr nachweisbar sind. Man erhält ein 30 %ige Polyurethanlösung mit endständigen Alkoxysilanstruktureinheiten, die Viskosität beträgt 20 500 mPas.

Nach 4 Wochen Lagerung im geschlossenen Gefäß bei 60°C beträgt die Viskosität 22 000 mPas.

### Vergleichsbeispiel 4

Zu Vergleichszwecken wurde der Versuch 2) wiederholt, allerdings wurde als Kettenabbruchreagenz eine äquivalente Menge an Di-butylamin eingesetzt.

Bei 50°C Lagerung im geschlossenen Gefäß war die Viskosität von ursprünglich 22 000 mPas bis auf 8 500 mPas abgefallen. Dies ist wahrscheinlich auf eine molekulargewichtserniedrigende und damit viskositätsreduzierend wirkende Reaktion überschüssigen Dibutylamins mit den Esterbindungen des Polyols zurückzuführen.

### Vergleichsbeispiel 5

Zu Vergleichszwecken wurde der Versuch 2) wiederholt, allerdings wurde als Kettenabbruchreagenz eine äquivalente Menge an Butanonoxim eingesetzt. Damit konnte ebenfalls eine bei 60°C Lagerung stabile Polyurethanlösung erhalten werden.

Zum Vergleich der Beschichtungseigenschaften wurde aus den Polyurethanlösungen gemäß Beispiel 3) und Vergleichsbeispiel 5) Beschichtungsfilme angefertigt, getrocknet und geprüft.
Die Filmstärke betrug 42 g/m².

Folgende Ergebnisse wurden erhalten:

| | Beispiel 3 | Vergleichsbeispiel 5 |
|---|---|---|
| Modul 100 % | 5,8 MPa | 4,5 MPa |
| Zugfestigkeit/Bruchdehnung (trocken): | 58,3 MPa/680 % | 45,0 MPa/450 % |
| Zugfestigkeit/Bruchdehnung (nach 2 Wochen Hydrolysetest) | 55,4 MPa/660 % | 35,0 MPa/450 % |
| Volumenquellung Ethylacetat | 350 % | 450 % |
| Schmelzpunkt | 165°C | 165°C |

Die Ergebnisse zeigen, das die erfindungsgemäße Polyurethanlösung die Herstellung von Beschichtungen ermöglicht mit besseren mechanischen Filmwerten, verbesserter Hydrolysebeständigkeiten sowie geringerer Quellung mit Essigester.

### Beispiel 6

In einem 3-1-Reaktionsgefäß mit Rühr-, Kühl- und Heizvorrichtung werden 270 g eines difunktionellen hydrophilen Ethylenoxidpolyethers mit dem Molekulargewicht 2 000 g/Mol, 57,9 g eines difunktionellen aliphatischen Polycarbonatdiols mit dem Molekulargewicht 2 000 g/Mol (Desmophen 2020, Bayer AG) und 57,9 g eines difunktionellen Tetrahydrofuranpolyethers mit dem Molekulargewicht 2 000 g/Mol und 52 g Butandiol-1,4 eingewogen und auf 60°C erwärmt. Dann werden 203 g 4,4'-MDI (Desmodur 44M, Bayer AG) sowie 748 g Dimethylformamid und 748 g Toluol zugegeben und bei 70°C solange umgesetzt, bis die gewünschte Viskosität erreicht ist. Falls vor Erreichen der Zielviskosität (20-30 000 mPas bei 23°C) der Isocyanatgehalt 0 erreicht wird, werden geringe Mengen 4,4'-MDI und gegebenenfalls auch geringe Mengen Butandiol-1,4 nachgesetzt. Bei Erreichen der Zielviskosität werden 4,5 g 3-Aminopropyltrimethoxysilan zugegeben und solange gerührt, bis der Isocyanatwert 0 ist, gegebenenfalls muß eine kleine Menge kettenabbrechendes monoaminofunktionelles Alkoxysilan nachgesetzt werden. Man erhält ein 30 %ige Polyurethanlösung mit endständigen Alkoxysilanstruktureinheiten, die Viskosität beträgt 24 000 mPas.

Während einer Raumtemperaturlagerung im geschlossenen Gefäß über 3 Monate blieb die Viskosität konstant. Nach einer Lagerung im geschlossenen Gefäß bei 60°C über 4 Wochen wurde eine Viskosität von 24 000 mPas ermittelt.

Die anwendungstechnische Prüfung als Beschichtungsfilm ergab folgende Werte:
Modul 100%: 5,4 MPa
Zugfestigkeit/Bruchdehnung (trocken): 32,9 MPa/590 %
Zugfestigkeit/Bruchdehnung (naß): 30,7 MPa/850%
Volumenquellung mit Ethylacetat: 80 %
Volumenquellung mit Wasser: 80 %
Wasserdampfdurchlässigkeit nach SST: 15000 g m²·d

Die Wasserdampfdurchlässigkeit wird nach den Maßgaben gemessen, wie sie in der Druckschrift DS 2109 TM1 der British Textile Technology Group, Manchester, England niedergelegt ist.

Überraschenderweise können auch besonders hochwertige Beschichtungen mit hoher Wasserdampfdurchlässigkeit, wie sie z.B. bei der Herstellung hochwertiger weicher Direktstriche oder Deckstriche für wasserdampfdurchlässige textile Materialien im Bekleidungs- und Hygienesektor gefordert werden, hergestellt werden.

### Beispiel 7

In einem 3-1-Reaktionsgefäß mit Rühr-, Kühl- und Heizvorrichtung werden 450,5 g eines difunktionellen Adipinsäure-Hexandiol-Neopentylglykol-Polyesters mit dem Molekulargewicht 1 700 g/Mol eingewogen und auf 70°C erwärmt. Dann werden 122,1 g Isophorondiisocyanat (Desmodur I, Bayer AG) zugegeben und bei 100°C solange umgesetzt, bis der theoretische Isocyanatwert erreicht worden ist. Dann werden 608 g Toluol zugegeben, das Polymer gelöst und auf 30°C abgekühlt. Direkt nach Zugabe von 304 g Isopropanol wird eine in einem separaten Gefäß hergestellte Kettenverlängerungslösung aus 39,9 g Isophorondiamin, 304 g Isopropanol, 252 g Methoxypropanol und 9,0 g N-2-(aminoethyl)-3-aminopropyltrimethoxy-silan in 30 Minuten zudosiert. Nach Ende der Zugabe ist ein starker Viskositätsanstieg zu beobachten. 15 Minuten nach der Zugabe ist eine Viskosität von 22 000 mPas (23°C) erreicht, dann werden 6,2 g Aminopropyltrimethoxysilan zugegeben und solange gerührt bis keine Isocyanatgruppen mehr nachweisbar sind.

Man erhält ein 30 %ige Polyurethanlösung mit end- und seitenständigen Alkoxysilanstruktureinheiten, die Viskosität beträgt 20 500 mPas.

Die anwendungstechnische Prüfung als Beschichtungsfilm ergab folgende Werte:
Modul 100 %: 5,9 MPa
Zugfestigkeit/Bruchdehnung (trocken): 51,9 MPa/500 %
Zugfestigkeit/Bruchdehnung nach 2 Wochen Hydrolysetest: 50,7 MPa/450 %
Volumenquellung mit Ethylacetat: 350 %
Schmelzpunkt: 210°C

Vergleicht man dieses Ergebnis mit dem Prüfergebnis aus Vergleichsbeispiel 5), welches keine seiten- bzw. endständigen Alkoxysilangruppen, dafür jedoch Butanonoxim als Abstopp-reagenz enthält, so erkennt man, daß die erfindungsgemäße Polyurethanlösung ein ausgezeichnetes mechanisches Eigenschaftsniveau, insbesondere eine ausgezeichnete Hydrolysebeständigkeit, trotz der Verwendung eines Polyesterpolyols, und für einige Anwendung, z.B. im Textilbeschichtungsbereich besonders vorteilhaft, einen deutlich höheren Schmelzpunkt aufweist.

Dieses Ergebnis ist besonders überraschend, weil die Kombination aus hohem filmmechanischen Eigenschaftsniveau, insbesondere sehr hoher Dehnfähigkeit bzw. Elastizität, sehr guter Hydrolysebeständigkeit und hohem Schmelzpunkt mit Polyurethanlösungen nach dem Stand der Technik nicht erreichbar ist.

## Patentansprüche

1. Polyurethanlösungen mit Alkoxysilanendgruppeneinheiten, **dadurch gekennzeichnet, dass** sie organisch gelöste Umsetzungsprodukte
a) mindestens eines, mindestens difunktionellen Polyols des Molekulargewichtes 500 bis 16 000,
b) mindestens eines, mindestens difunktionellen Polyisocyanates des Molekulargewichtes 140 bis 1 500,
c) mindestens eines niedermolekularen, mindestens difunktionellen Alkohols und/oder Amins des Molekulargewichtes 32 bis 500,
d) mindestens einer, mindestens eine Alkoxysilangruppe und eine isocyanatreaktive Gruppe enthaltenden Verbindung und
e) gegebenenfalls einer monofunktionellen Substanz mit einer Amino-, Alkohol- oder Oximgruppe,
sind, wobei die Menge an Abstopperäquivalenten aus Komponente d) mindestens 50 % der gesamten Abstoppermenge aus d) und e) beträgt und die Polyurethane keine freien Isocyanatgruppen enthalten und ein durch Gelpermeationschromatographie bestimmtes Molekulargewicht von 4 000 bis 500 000 g/mol aufweisen.

2. Polyurethanlösungen gemäß Anspruch 1, **dadurch gekennzeichnet, dass** sie organisch gelöste Umsetzungsprodukte
a) 40 bis 92 Gew.-% mindestens eines, mindestens difunktionellen Polyols des Molekulargewichtes 500 bis 16 000,
b) 7 bis 50 Gew.% mindestens eines, mindestens difunktionellen Polyisocyanats des Molekulargewichtes 140 bis 1 500,
c) 0,5 bis 20 Gew.-% mindestens eines niedermolekularen, mindestens difunktionellen Alkohols und/oder Amins des Molekulargewichtes 32 bis 500,
d) 0,1 bis 5 Gew.-% mindestens einer, mindestens eine Alkoxysilangruppe und eine isocyanatreaktive Gruppe enthaltenden Verbindung und
e) gegebenenfalls einer monofunktionellen Substanz mit einer Amino-, Alkohol- oder Oximgruppe,
sind, wobei die Menge am Abstopperäquivalenten aus Komponente d) mindestens 75 % der gesamten Abstoppermenge aus d) und e) beträgt und die Polyurethane keine freien Isocyanatgruppen enthalten und ein Molekulargewicht von 4 000 bis 500 000 g/mol aufweisen.

3. Polyurethanlösungen gemäß Anspruch 1, **dadurch gekennzeichnet, dass** sie organisch gelöste Umsetzungsprodukte sind,
a) 47 bis 88 Gew.-% mindestens eines, mindestens difunktionellen Polyols des Molekulargewichtes 500 bis 16 000,
b) 10 bis 40 Gew.-% mindestens eines, mindestens difunktionellen Polyisocyanats des Molekulargewichtes 140 bis 1 500,
c) 0,8 bis 17 Gew.-% mindestens eines niedermolekularen, mindestens difunktionellen Alkohols und/oder Amins des Molekulargewichtes 32 bis 500,
d) 0,2 bis 3,0 Gew.-% einer eine Alkoxysilangruppe und eine isocyanatreaktive Gruppe enthaltenden Verbindung und
e) 0-0,5 Gew.-% einer monofunktionellen Substanz mit einer Amino-, Alkohol- oder Oximgruppe,
sind, wobei die Menge am Abstopperäquivalenten aus Komponente d) mindestens 95 % der gesamten Abstoppennenge aus d) und e) beträgt und die Polyurethane keine freien Isocyanatgruppen enthalten und ein durch Gelpermeationschromatographic bestimmtes Molekulargewicht von 4 000 bis 500 000 g/mol aufweisen.

4. Polyurethanlösungen gemäß Anspruch 1, **dadurch gekennzeichnet, dass** Komponente a) zu mindestens 50 Gew.-% aus Polycarbonatdiolen des Molekulargewichtes 900 bis 2 500 besteht.

5. Polyurethanlösungen gemäß Anspruch 1, **dadurch gekennzeichnet, dass** als Komponente a) 10 bis 60 Gew.-% hydrophile Polyole neben 23 bis 50 Gew.-% nichthydrophilen Polyolen, jeweils bezogen auf Gesamtfeststoffgehalt des Polyurethans, enthalten sind, wobei die Gesamtmenge Komponente a) maximal 92 Gew.-% des Gesamtfeststoffgehaltes des Polyurethans beträgt.

6. Polyurethanlösungen gemäß Anspruch 1, **dadurch gekennzeichnet, dass** als Komponente b) ausschließlich aliphatische bzw. cycloaliphatische Diisocyanate, bestehend zu mindestens 75 Gew.-% aus Isophorondiisocyanat enthalten ist.

7. Polyurethanlösungen gemäß Anspruch 1, **dadurch gekennzeichnet, dass** als Komponente b) ausschließlich 2,4- bzw. 2,6-Diisocyanatotoluol und/oder 4,4'-Diisocyanatodiphenylmethan enthalten sind.

8. Polyurethanlösungen gemäß Anspruch 1, **dadurch gekennzeichnet, dass** als Komponente b) Allophanatgruppen enthaltende Diisocyanate enthalten sind.

9. Polyurethanlösungen gemäß Anspruch 1 bis 3, **dadurch gekennzeichnet, dass** als Komponente c) hydrophile, Salzgruppen aufweisende difunktionelle Verbindungen in Mengen von 2 bis 16 Gew.-% enthalten sind.

10. Polyurethanlösungen gemäß Anspruch 1, **dadurch gekennzeichnet, dass** eine hydrophile Komponente c) zusammen mit einem hydrophilen Polyol a) enthalten ist.

11. Polyurethanlösungen gemäß Anspruch 1, **dadurch gekennzeichnet, dass** Alkoxysilangruppen enthaltende, diaminofunktionelle Komponenten c) als Kettenverlängerer in Mengen bis 2 Gew.-% enthalten sind.

12. Polyurethanlösungen gemäß Anspruch 1, **dadurch gekennzeichnet, dass** als Komponente c) Hydrazin(hydrat), Adipinsäuredihydrazid und/oder das Umsetzungsprodukt aus 2 Mol Propylencarbonat und 1 Mol Hydrazin in Mengen von 0,1 bis 4,5 Gew.-% enthalten sind.

13. Polyurethanlösungen gemäß Anspruch 1, **dadurch gekennzeichnet, dass** 0,3 bis 1,3 Gew.-% einer Verbindung mit einer isocyanatreaktiven Gruppe und mindestens einer Alkoxysilangruppe enthalten sind.

14. Polyurethanlösungen gemäß Anspruch 1, **dadurch gekennzeichnet, dass** als Komponente d) ein monoaminofunktionelles, Asparaginsäureesterstrukturen enthaltendes Umsetzungsprodukte eines monoaminofunktionellen Alkoxysilans mit 0,5 bis 1,1 Äquivalenten Maleinsäurealkylestern enthalten ist.

15. Polyurethanlösungen gemäß Anspruch 1, **dadurch gekennzeichnet, dass** der rechnerisch ermittelte Gehalt des Feststoffes der Polyurethanlösungen an -Si-(O-)3 Struktureinheiten weniger als 1,2 Gew.-% beträgt.

16. Polyurethanlösungen gemäß Anspruch 1, **dadurch gekennzeichnet, dass** als Komponente d) ein monoaminofunktionelles Alkoxysilan in Mengen von 0,3 bis 1,3 Gew.-% zusammen mit 0,1 bis 2,0 Gew.-% eines diaminofunktionellen Alkoxysilans Komponente c) enthalten ist, wobei die Anzahl der endständigen Alkoxysilangruppen mindestens 50 Gew.-% aller eingebauten Alkoxysilangruppen beträgt.

17. Verfahren zur Herstellung von Polyurethanlösungen gemäß Anspruch 1, **dadurch gekennzeichnet, dass** zunächst aus mindestens einem Polyol a), mindestens einem difunktionellen Polyisocyanates b) gegebenenfalls unter Mitverwendung einer niedermolekularen Komponente c) in einer ein- oder zweistufigen Reaktion ein isocyanatfunktionelles Polyurethan hergestellt wird, welches dann gegebenenfalls in einem weiteren Reaktionsschritt durch Umsetzung mit einer mindestens difunktionellen Komponente c) einen weiteren Molekulargewichtsaufbau erfährt und in einem abschließenden Reaktionsschritt mit mindestens einer eine Alkoxysilangruppe und eine isocyanatreaktive Gruppe enthaltenden Verbindung d), gegebenenfalls unter Mitverwendung einer monofunktionellen Komponente e) zu einem keine freien Isocyanatgruppen mehr aufweisenden Polyurethan mit Alkoxysilanendgruppeneinheiten umgesetzt wird, wobei das Polyurethan ein durch Gelpermeationschromatographic bestimmtes Molekulargewicht von 4 000 bis 500 000 g/mol hat und wobei entweder vor, während oder nach dem ersten Reaktionsschritt soviel organisches Lösemittel zugesetzt wird, das die resultierende Polyurethanlösung mit Alkoxysilanendgruppen einen Festkörpergehalt von 9 bis 65 Gew.-% aufweist.

18. Verfahren gemäß Anspruch 17, **dadurch gekennzeichnet, dass** eine einstufige Umsetzung der Komponenten a), b) und gegebenenfalls c) zu einem isocyanatfunktionellen hochmolekularen Polyurethan, gegebenenfalls in Anwesenheit geeigneter Lösemittel, wobei gegebenenfalls durch geringes Nachsetzen von Polyisocyanat b) und/oder niedermolekulare difunktionelle Komponente c) die gewünschte Viskosität und damit das zur Erzielung der erforderlichen Eigenschaften nötige Molekulargewicht erreicht wird und wobei anschließend die Kettenabbruchreaktion durch Zugabe eines monoaminofunktionellen Alkoxysilans d) erfolgt.

19. Verwendung von Polyurethanlösungen gemäß Ansprüchen 1 bis 16 in Lacken, Beschichtungen, Dichtstoffen und/oder Klebstoffen.

20. Verwendung von Polyurethanlösungen gemäß Ansprüchen 1 bis 16 für die Lackierung und/oder Beschichtung von Kunststoffen.

21. Verwendung von Polyurethanlösungen gemäß Ansprüchen 1 bis 16 für die Textil- und Lederbeschichtung.

22. Verwendung von Polyurethanlösungen gemäß Ansprüchen 1 bis 16 in wasserdampfdurchlässigen Leder-und Textilbeschichtungen.

23. Polyurethanbeschichtungen erhältlich aus Polyurethanlösungen gemäß Ansprüchen 1 bis 16.

24. Artikel umfassend Polyurethanbeschichtungen erhältlich aus Polyurethanlösungen gemäß Ansprüchen 1 bis 16.

25. Artikel gemäß Anspruch 24, **dadurch gekennzeichnet, dass** es sich um Lederartikel handelt.

26. Artikel gemäß Anspruch 24, **dadurch gekennzeichnet, dass** es sich um Textilartikel handelt.

27. Artikel gemäß Anspruch 24, **dadurch gekennzeichnet, dass** es sich um Kunststoffartikel handelt.

## Revendications

1. Solutions de polyuréthannes à motifs de groupes terminaux alcoxysilane, **caractérisées en ce qu'**elles consistent en produits de réaction, à l'état de solution organique, de
a) au moins un polyol, au moins difonctionnel, de poids moléculaire 500 à 16 000,
b) au moins un polyisocyanate, au moins difonctionnel, de poids moléculaire 140 à 1500,
c) au moins un alcool et/ou une amine à bas poids moléculaire, au moins difonctionnels, de poids moléculaire 32 à 500,
d) au moins un composé contenant au moins un groupe alcoxysilane et un groupe réactif avec les isocyanates, et
e) le cas échéant une substance monofonctionnelle à un groupe amino, alcool ou oxime,
la quantité des équivalents de coupeurs de chaînes du composant d) représentant au moins 50 % de la quantité totale des coupeurs de chaînes de d) et e) et les polyuréthannes ne contenant pas de groupe isocyanate libre et ayant un poids moléculaire, déterminé par chromatographie de perméation de gel, de 4 000 à 500 000 g/mol.

2. Solutions de polyuréthannes selon la revendication 1, **caractérisées en ce qu'**elles consistent en produits de réaction, à l'état de solution organique, de
a) 40 à 92 % en poids d'au moins un polyol, au moins difonctionnel, de poids moléculaire 500 à 16 000,
b) 7 à 50 % en poids d'au moins un polyisocyanate, au moins difonctionnel, de poids moléculaire 140 à 1 500,
c) 0,5 à 20 % en poids d'au moins un alcool et/ou une amine à bas poids moléculaire, au moins difonctionnels, de poids moléculaire 32 à 500,
d) 0,1 à 5 % en poids d'au moins un composé contenant au moins un groupe alcoxysilane et un groupe réactif avec les isocyanates, et
e) le cas échéant une substance monofonctionnelle à un groupe amino, alcool ou oxime,
la quantité des équivalents de coupeurs de chaînes du composant d) représentant au moins 75 % de la quantité totale de coupeurs de chaînes de d) et e), les polyuréthannes ne contenant pas de groupe isocyanate libre et ayant un poids moléculaire de 4 000 à 500 000 g/mol.

3. Solutions de polyuréthannes selon la revendication 1, **caractérisées en ce qu'**elles consistent en produits de réaction, à l'état de solution organique, de
a) 47 à 88 % en poids d'au moins un polyol, au moins difonctionnel, de poids moléculaire 500 à 16 000,
b) 10 à 40 % en poids d'au moins un polyisocyanate, au moins difonctionnel, de poids moléculaire 140 à 1 500,
c) 0,8 à 17 % en poids d'au moins un alcool et/ou une amine à bas poids moléculaire, au moins difonctionnels, de poids moléculaire 32 à 500,
d) 0,2 à 3,0 % en poids d'un composé contenant un groupe alcoxysilane et un groupe réactif avec les isocyanates, et
e) 0 à 0,5 % en poids d'une substance monofonctionnelle à un groupe amino, alcool ou oxime,
la quantité des équivalents de coupeurs de chaînes du composant d) représentant au moins 95 % de la quantité totale de coupeurs de chaînes de d) et e), les polyuréthannes ne contenant pas de groupe isocyanate libre et ayant un poids moléculaire, déterminé par chromatographie de perméation de gel, de 4 000 à 500 000 g/mol.

4. Solutions de polyuréthannes selon la revendication 1, **caractérisées en ce que** le composant a) consiste pour au moins 50 % en poids en polycarbonate-diols de poids moléculaire 900 à 2500.

5. Solutions de polyuréthannes selon la revendication 1, **caractérisées en ce qu'**elles contiennent en tant que composant a) 10 à 60 % en poids de polyols hydrophiles avec 23 à 50 % en poids de polyols non hydrophiles, dans les deux cas par rapport à la teneur totale en matières solides du polyuréthanne, la quantité totale du composant a) représentant au maximum 92 % du poids des matières solides totales du polyuréthanne.

6. Solutions de polyuréthannes selon la revendication 1, **caractérisées en ce qu'**elles contiennent en tant que composant b) exclusivement des diisocyanates aliphatiques et cycloaliphatiques, consistant eux-mêmes pour au moins 75 % en poids en isophorone-diisocyanate.

7. Solutions de polyuréthannes selon la revendication 1, **caractérisées en ce qu'**elles contiennent en tant que composant b) exclusivement du 2,4- et/ou du 2,6-diisocyanatotoluène et/ou du 4,4'-diisocyanatodiphénylméthane.

8. Solutions de polyuréthannes selon la revendication 1, **caractérisées en ce que** le composant b) consiste en diisocyanates à groupes allophanate.

9. Solutions de polyuréthannes selon les revendications 1 à 3, **caractérisées en ce que** le composant c), contenu en proportions de 2 à 16 % en poids, consiste en composés hydrophiles difonctionnels à groupes salins.

10. Solutions de polyuréthannes selon la revendication 1, **caractérisées en ce qu'**elles contiennent un composant c) hydrophile et un polyol a) hydrophile.

11. Solutions de polyuréthannes selon la revendication 1, **caractérisées en ce que** le composant c), diaminofonctionnel contenant des groupes alcoxysilane et faisant fonction d'agent d'allongement des chaînes, est contenu en proportions allant jusqu'à 2 % en poids.

12. Solutions de polyuréthannes selon la revendication 1, **caractérisées en ce qu'**elles contiennent en tant que composant c) l'hydrazine (hydrate), le dihydrazide adipique et/ou le produit de réaction de 2 mol de carbonate de propylène et de 1 mol d'hydrazine, en quantité de 0,1 à 4,5 % en poids.

13. Solutions de polyuréthannes selon la revendication 1, **caractérisées en ce qu'**elles contiennent de 0,3 à 1,3 % en poids d'un composé à un groupe réactif avec les isocyanates et au moins un groupe alcoxysilane.

14. Solutions de polyuréthannes selon la revendication 1, **caractérisées en ce que** le composant d) consiste en un produit de réaction monoaminofonctionnel, contenant des structures d'ester aspartique, d'un alcoxysilane monoaminofonctionnel avec 0,5 à 1,1 équivalent de maléates d'alkyle.

15. Solutions de polyuréthannes selon la revendication 1, **caractérisées en ce que** la teneur des matières solides des solutions de polyuréthannes en motifs de structure -Si-(O-)3, déterminée par le calcul, est inférieure à 1,2 % en poids.

16. Solutions de polyuréthannes selon la revendication 1, **caractérisées en ce que** le composant d) consiste en un alcoxysilane monoaminofonctionnel en proportions de 0,3 à 1,3 % en poids, avec 0,1 à 2,0 % en poids d'un alcoxysilane diaminofonctionnel pour le composant c), le nombre des groupes terminaux alcoxysilane représentant au moins 50 % du poids total de tous les groupes alcoxysilane chimiquement combinés.

17. Procédé pour la préparation des solutions de polyuréthannes selon la revendication 1, **caractérisé en ce que** l'on prépare d'abord, à partir d'au moins un polyol a), d'au moins un polyisocyanate difonctionnel b), le cas échéant avec utilisation conjointe d'un composant à bas poids moléculaire c), dans une réaction à 1 ou 2 stades opératoires, un polyuréthanne à fonctions isocyanate qui subit ensuite, le cas échéant dans un autre stade de réaction, par réaction avec un composant c) au moins difonctionnel, une nouvelle augmentation du poids moléculaire et est converti, dans un stade final, par réaction avec un composé d) contenant au moins un groupe alcoxysilane et un groupe réactif avec les isocyanates, le cas échéant avec utilisation conjointe d'un composant monofonctionnel e), en un polyuréthanne ne contenant plus de groupes isocyanate libres mais ayant des motifs de groupes terminaux alcoxysilane, ce polyuréthanne ayant un poids moléculaire, déterminé par chromatographie de perméation de gel, de 4 000 à 500 000 g/mol, avec addition avant, durant ou après le premier stade de réaction, d'un solvant organique en quantité telle que la solution de polyuréthanne obtenue, à groupes terminaux alcoxysilane, ait une teneur en matières solides de 9 à 65 % en poids.

18. Procédé selon la revendication 17, **caractérisé en ce que** l'on procède à une réaction en un seul stade opératoire des composants a), b) et le cas échéant c), donnant un polyuréthanne à haut poids moléculaire et à fonctions isocyanate, éventuellement en présence de solvants appropriés, une faible addition éventuelle de compléments du polyisocyanate b) et/ou du composant difonctionnel à bas poids moléculaire c) permettant d'atteindre la viscosité voulue et, par suite, le poids moléculaire nécessaire pour assurer les propriétés voulues, après quoi on procède à la réaction de coupure des chaînes par addition d'un alcoxysilane monoaminofonctionnel d).

19. Utilisation des solutions de polyuréthannes selon les revendications 1 à 16 dans des vernis, des produits de revêtement, des masses d'étanchéité et/ou des adhésifs.

20. Utilisation des solutions de polyuréthannes selon les revendications 1 à 16 pour la peinture et/ou le revêtement de résines synthétiques.

21. Utilisation des solutions de polyuréthannes selon les revendications 1 à 16 pour le revêtement des textiles et du cuir.

22. Utilisation des solutions de polyuréthannes selon les revendications 1 à 16 pour l'application de revêtements, perméables à la vapeur d'eau, sur le cuir et les matières textiles.

23. Revêtements de polyuréthannes obtenus à partir des solutions de polyuréthannes selon les revendications 1 à 16.

24. Articles comportant des revêtements de polyuréthannes obtenus à partir des solutions de polyuréthannes selon les revendications 1 à 16.

25. Articles selon la revendication 24, **caractérisés en ce qu'**ils consistent en articles de cuir.

26. Articles selon la revendication 24, **caractérisés en ce qu'**ils consistent en articles textiles.

27. Articles selon la revendication 24, **caractérisés en ce qu'**ils consistent en articles de résines synthétiques.

## Claims

1. Polyurethane solutions with alkoxysilane end group units, **characterized in that** they are reaction products, in organic solution, of
a) at least one at least difunctional polyol of molecular weight 500 to 16,000,
b) at least one at least difunctional polyisocyanate of molecular weight 140 to 1,500,
c) at least one low molecular weight at least difunctional alcohol and/or amine of molecular weight 32 to 500,
d) at least one compound containing at least one alkoxysilane group and an isocyanate-reactive group and
e) optionally a monofunctional substance with an amino, alcohol or oxime group,
the amount of stopper agent equivalents from component d) being at least 50% of the total amount of stopper agent from d) and e), and the polyurethanes containing no free isocyanate groups and having a molecular weight, determined by gel permeation chromatography, of 4,000 to 500,000 g/mol.

2. Polyurethane solutions according to claim 1, **characterized in that** they are reaction products, in organic solution, of
a) 40 to 92 wt.% of at least one at least difunctional polyol of molecular weight 500 to 16,000,
b) 7 to 50 wt.% of at least one at least difunctional polyisocyanate of molecular weight 140 to 1,500,
c) 0.5 to 20 wt.% of at least one low molecular weight at least difunctional alcohol and/or amine of molecular weight 32 to 500,
d) 0.1 to 5 wt.% of at least one compound containing at least one alkoxysilane group and an isocyanate-reactive group and
e) optionally a monofunctional substance with an amino, alcohol or oxime group,
the amount of stopper agent equivalents from component d) being at least 75% of the total amount of stopper agent from d) and e), and the polyurethanes containing no free isocyanate groups and having a molecular weight of 4,000 to 500,000 g/mol.

3. Polyurethane solutions according to claim 1, **characterized in that** they are reaction products, in organic solution, of
a) 47 to 88 wt.% of at least one at least difunctional polyol of molecular weight 500 to 16,000,
b) 10 to 40 wt.% of at least one at least difunctional polyisocyanate of molecular weight 140 to 1,500,
c) 0.8 to 17 wt.% of at least one low molecular weight at least difunctional alcohol and/or amine of molecular weight 32 to 500,
d) 0.2 to 3.0 wt.% of a compound containing an alkoxysilane group and an isocyanate-reactive group and
e) 0-0.5 wt.% of a monofunctional substance with an amino, alcohol or oxime group,
the amount of stopper agent equivalents from component d) being at least 95% of the total amount of stopper agent from d) and e), and the polyurethanes containing no free isocyanate groups and having a molecular weight, determined by gel permeation chromatography, of 4,000 to 500,000 g/mol.

4. Polyurethane solutions according to claim 1, **characterized in that** component a) comprises polycarbonate diols of molecular weight 900 to 2,500 to the extent of at least 50 wt.%.

5. Polyurethane solutions according to claim 1, **characterized in that** they comprise as component a) 10 to 60 wt.% hydrophilic polyols, in addition to 23 to 50 wt.% non-hydrophilic polyols, in each case based on the total solids content of the polyurethane, the total amount of component a) being not more than 92 wt.% of the total solids content of the polyurethane.

6. Polyurethane solutions according to claim 1, **characterized in that** they comprise as component b) exclusively aliphatic or cycloaliphatic diisocyanates comprising isophorone-diisocyanate to the extent of at least 75 wt.%.

7. Polyurethane solutions according to claim 1, **characterized in that** they comprise as component b) exclusively 2,4- or 2,6-diisocyanatotoluene and/or 4,4'-diisocyanatodiphenylmethane.

8. Polyurethane solutions according to claim 1, **characterized in that** they comprise as component b) diisocyanates containing allophanate groups.

9. Polyurethane solutions according to claims 1 to 3, **characterized in that** they comprise as component c) hydrophilic difunctional compounds containing salt groups in amounts of 2 to 16 wt.%.

10. Polyurethane solutions according to claim 1, **characterized in that** they comprise a hydrophilic component c) together with a hydrophilic polyol a).

11. Polyurethane solutions according to claim 1, **characterized in that** they comprise diamino-functional components c) containing alkoxysilane groups as chain-lengthening agents in amounts of up to 2 wt.%.

12. Polyurethane solutions according to claim 1, **characterized in that** they comprise as component c) hydrazine (hydrate), adipic acid dihydrazide and/or the reaction product of 2 mol propylene carbonate and 1 mol hydrazine in amounts of 0.1 to 4.5 wt.%.

13. Polyurethane solutions according to claim 1, **characterized in that** they comprise 0.3 to 1.3 wt.% of a compound with an isocyanate-reactive group and at least one alkoxysilane group.

14. Polyurethane solutions according to claim 1, **characterized in that** they comprise as component d) a monoamino-functional reaction product, containing aspartic acid ester structures, of a monoamino-functional alkoxysilane with 0.5 to 1.1 equivalents of maleic acid alkyl esters.

15. Polyurethane solutions according to claim 1, **characterized in that** the mathematically determined content of -Si-(O-)₃ structural units in the solids of the polyurethane solutions is less than 1.2 wt.%.

16. Polyurethane solutions according to claim 1, **characterized in that** they comprise as component d) a monoamino-functional alkoxysilane in amounts of 0.3 to 1.3 wt.%, together with 0.1 to 2.0 wt.% of a diamino-functional alkoxysilane component c), the number of terminal alkoxysilane groups being at least 50 wt.% of all the alkoxysilane groups incorporated.

17. Process for the preparation of polyurethane solutions according to claim 1, **characterized in that** an isocyanate-functional polyurethane is first prepared in a one- or two-stage reaction from at least one polyol a) and at least one difunctional polyisocyanate b), optionally co-using a low molecular weight component c), and then optionally undergoes a further build up in molecular weight in a further reaction step by reaction with an at least difunctional component c), and is reacted in a concluding reaction step with at least one compound d) containing an alkoxysilane group and an isocyanate-reactive group, optionally co-using a monofunctional component e), to give a polyurethane with alkoxysilane end group units which no longer contains free isocyanate groups, the polyurethane having a molecular weight, determined by gel permeation chromatography, of 4,000 to 500,000 g/mol, and an organic solvent being added either before, during or after the first reaction step in an amount such that the resulting polyurethane solution with alkoxysilane end groups has a solids content of 9 to 65 wt.%.

18. Process according to claim 17, **characterized in that** a one-stage reaction of components a), b) and optionally c) is carried out, optionally in the presence of suitable solvents, to give an isocyanate-functional high molecular weight polyurethane, the desired viscosity and therefore the molecular weight necessary to achieve the required properties optionally being achieved by subsequently adding a small amount of polyisocyanate b) and/or low molecular weight difunctional component c), and the chain-stopping reaction then being carried out by addition of a monoamino-functional alkoxysilane d).

19. Use of polyurethane solutions according to claims 1 to 16 in paints, coatings, sealants and/or adhesives.

20. Use of polyurethane solutions according to claims 1 to 16 for painting and/or coating plastics.

21. Use of polyurethane solutions according to claims 1 to 16 for coating textiles and leather.

22. Use of polyurethane solutions according to claims 1 to 16 in leather and textile coatings which are permeable to water vapour.

23. Polyurethane coatings obtainable from polyurethane solutions according to claims 1 to 16.

24. Articles comprising polyurethane coatings obtainable from polyurethane solutions according to claims 1 to 16.

25. Articles according to claim 24, **characterized in that** they are leather articles.

26. Articles according to claim 24, **characterized in that** they are textile articles.

27. Articles according to claim 24, **characterized in that** they are articles of plastic.
